# EUROPÄISCHE PATENTANMELDUNG

(11) **EP 1 340 948 A1**
(43) Veröffentlichungstag der Anmeldung: **03.09.2003**
(21) Anmeldenummer: 02004259.4
(22) Anmeldetag: 27.02.2002
(51) Int. Cl.: F24J 2/34, F28D 20/00

(54) **Speicher für Thermosiphonanlagen**

(71) Anmelder: Green&one&TEC&Solarindustrie GmbH, 9300 St.Veit (AT)
(72) Erfinder: Kanduth, Robert, 9020 Klagenfurt (AT); Lutschounig, Klaus, 9020 Klagenfurt (AT); Schader, Gerald, 9073 Viktring (AT); Fesharaki, Morteza, 8042 Graz (AT); Hofstätter, Uwe, 9020 Riedlingsdorf (AT)
(74) Vertreter: Schön, Theodor, Patent- und Zivilingenieur

(57) **Zusammenfassung**

Die vorliegende Erfindung betrifft eine Thermosiphonanlage, bestehend aus einem Gestell (1), einem Kollektor (2), in welchem ein Wärmeträgermedium mittels einstrahlender Sonnenenergie über einen Absorber von niedrigerem auf höheres Temperaturniveau gebracht wird und einem oberhalb des Kollektors horizontal angeordneten Speicherbehälter (3) mit einem Zulauf (7), welcher erwärmtes Wasser vom Kollektor (2) zum Speicher (3) transportiert, einer Versorgungsleitung (11), welche frisches Kaltwasser in den Speicherbehälter (3) leitet, einem Ablauf (8), welcher zur Ableitung des Wärmeträgermediums in den Kollektor (2) dient und einer Sammelleitung (14), welche zur Entnahme von Warmwasser zum Verbraucher dient, wobei die Versorgungsleitung (11) in den Speicherbehälter (3) ragt und sich entlang des Bodenbereiches fast über die gesamte Länge des Speicherbehälters (3) erstreckt und über ihre innerhalb des Speicherbehälters (3) liegende Länge eine Vielzahl von Durchtrittsöffnungen (18) für frisches Kaltwasser aufweist.

## Beschreibung

Die solare Warmwasserbereitung trägt einen bedeutenden Beitrag zur Schonung der Umwelt und zu Einsparungen an fossilen Ressourcen bei. Voraussetzung dafür sind gut funktionierende, robuste, möglichst passiv, also ohne Hilfsenergie arbeitende Systeme. Zur Erreichung dieses Zieles wird seit etlichen Jahren vermehrt der Gewinnung von Warmwasser mittels Sonnenkollektoren Augenmerk geschenkt. Eine sehr robuste und dabei einfach herzustellende Lösung besteht darin, die Kollektorfläche direkt an einen Speicherbehälter anzukoppeln. Die vorliegende Erfindung betrifft eine solche Thermosiphonanlage zur Gewinnung von Brauchwasser mittels Sonnenenergie.

Diese Anlagen sind einfach im Betrieb, haben dadurch auch sehr geringe Betriebskosten und stellen somit eine äußerst betreiberfreundliche Lösung dar. Das System der Thermosiphonanlagen beruht auf dem physikalischen Gesetz der Dichteunterschiede von Fluiden bei verschiedenen Temperaturen. Im Sonnenkollektor erwärmt sich das Wärmeträgermedium, meist Wasser oder - bei Zweikreissystemen - ein Wasser/Glykol-Gemisch, und erfährt aufgrund der Temperaturerhöhung einen Dichteabfall, welcher wiederum zu einer Druckdifferenz führt. Das wärmere Medium steigt im schräg angeordneten Kollektor nach oben und tritt dort in den angekoppelten Speicherbehälter ein. Aus dem Speicherbehälter strömt im Gegenzug kälteres Medium als Vorlauf in den Kollektor aus.

Der Wirkungsgrad eines Speicherbehälters ist abhängig von der Stabilität der Temperaturschichtung innerhalb des Speichers. Dies ist der Grund, weshalb herkömmliche Speicherbehälter eine hauptsächlich vertikal ausgerichtete Bauweise haben. Bei Thermosiphonanlagen ist jedoch der Speicher aus Gründen einer harmonischen äußeren Erscheinung sowie aus konstruktiven Gründen meist horizontal angeordnet. Dadurch ist die Höhe, welche zur Ausbildung einer Wärmeschichtung dienen kann, relativ begrenzt. Es bildet sich trotzdem eine Wärmeschichtung aus, diese ist jedoch äußerst instabil.

Der Wärmeertrag, der mittels Thermosiphonanlagen erzielbar ist, ist neben Faktoren wie Durchströmung der Kollektorfläche und Isolierung des Warmwasserbehälters in hohem Maße von der Aufrechterhaltung dieser Schichtung abhängig.

Die Schichtung bleibt im Speicher erhalten, solange sich der Speicherinhalt in Ruhe befindet. Sobald jedoch Warmwasser von einem Verbraucher entnommen wird, strömt Kaltwasser nach und es kommt unweigerlich zu einer Durchmischung innerhalb des Speichers, wodurch das Energieniveau relativ rasch absinkt.

Um diesem Durchmischungseffekt vorzubeugen und eine möglichst gute Ausbildung von Wärmeschichten im Speicher zu erwirken, sind Systeme bekannt, wie sie etwa in der EP 351 220 beschrieben sind, bei denen die Eintrittsöffnung vom Kollektor höher angeordnet ist als die Austrittsöffnung zu Kollektor. Andere Systeme, wie etwa in der US 5,537,990 beschrieben, ordnen die Einlauföffnung vom Kollektor am gegenüberliegenden Ende zur Ablauföffnung zum Kollektor des Speichers an. Auch hier wird als zusätzliche Unterstützung zur Schichtenausbildung die Einlauföffnung höher gelegt als die Auslauföffnung.

Umgekehrt werden die Ablauföffnung zum Warmwasserverbraucher möglichst hoch und die Zulauföffnung für frisches Kaltwsser möglichst tief im Speicher angeordnet. Zusätzliche Einbauten im Speicher, wie etwa Prallbleche oder Strömungstrichter wirken der Durchmischung zwar etwas entgegen, ihre Wirkung ist jedoch nach wie vor unbefriedigend, da es bei allen genannten Systemen nach wie vor zu einer starken Durchmischung der Wasserschichtung kommt.

Die vorliegende Erfindung stellt sich daher die Aufgabe, einen Speicherbehälter für eine Thermosiphonanlage zu schaffen, bei dem die Durchmischung der einzelnen Wärmeschichten bei bewegtem Fluid geringer ist als bei herkömmtlichen Systemen, sodass es zur Ausbildung von mindestens zwei Wasserschichten unterschiedlicher Temperaturen im Speicherbehälter kommt.

Diese Aufgabe wird durch die technischen Merkmale gelöst, wie sie in Anspruch 1 beschrieben sind. Weitere technische Ausgestaltungen und vorteilhafte Weiterentwicklungen sind in den Unteransprüchen beschrieben.

Der Effekt der momentanen Absenkung des Temperaturniveaus im Speicherbehälter hervorgerufen durch die starke Wirbelbildung ist beim Eintritt von frischem Kaltwasser am stärksten spürbar. Der größte Effekt zur Erhaltung der Wärmeschichtung ist daher erzielbar, wenn während der Abfuhr von Warmwasser zum Verbraucher und der damit zeitgleich verbundenen Zufuhr von kaltem Frischwasser in den Speicher mindestens zwei Wasserschichten mit unterschiedlichen Temperaturen erhalten bleiben.

Um während dieses Vorganges eine Vermischung des kälteren Wassers mit dem wärmeren Wasser zu vermeiden, werden für den Zustrom von kaltem Frischwasser im Bodenbereich und in einer bevorzugten Ausführung auch im Deckenbereich für die Abfuhr von Warmwasser zum Verbraucher entlag jeweils einer Versorgungs- bzw. Sammelleitung eine Vielzahl von Durchtrittsstellen angeordnet. Dadurch werden der Einströmquerschnitt wesentlich vergrößert und die Einströmgeschwindigkeit erheblich abgesenkt.

In einer besonders bevorzugten Ausführung werden dazu die Durchtrittsstellen entlang der Versorgungsleitung für kaltes Frischwasser so voneinander beabstandet und der Ausströmquerschnitt dergestalt gewählt, dass eine gleichmäßige Ausströmung an allen Durchtrittsstellen allein durch den Druckverlust in der Versorgungsleitung bewirkt wird.

In einer weiteren vorteilhaften Ausgestaltung der Erfindung werden die Austritts- bzw. Eintrittsöffnungen entlang der Versorgungs- bzw. Sammelleitungen von der Mittelachse des Speichers abgewandt angeordnet.

In einer alternativen Ausgestaltung der Erfindung besteht die Austrittsöfnung aus einem sich über die Länge der Versorgungsleitung erstreckenden Schlitz.

In einer weiteren alternativen Ausgestaltung der Erfindung sind die Austrittsöffnungen als Düsen ausgebildet.

Es versteht sich von selbst, dass die erfindungswesentlichen Merkmale sowohl in Einkreissystemen, bei welchen keine Trennung zwischen dem Mediumkreislauf vom Kollektor zum Speicher und zum Verbraucher stattfindet, als auch in Zweikreissystemen, bei welchen der Speicher als Doppelmantelbehälter ausgebildet ist, wobei das vom Kollektor kommende Wärmeträgermedium z.B. zwischen dem äußeren und dem inneren Mantel fließt und das Verbraucherwasser im Inneren des Doppelmantelbehälters gespeichert wird, Anwendung findet. Da den Zweikreissystemen aber in Zukunft mehr Bedeutung zukommen wird, sind in den Abbildungen ausschließlich Thermosiphonanlegen mit getrennten Kreisläufen dargestellt.

Die erfindungsgemäße Thermosiphonanlage wird anhand der Figuren näher beschrieben.

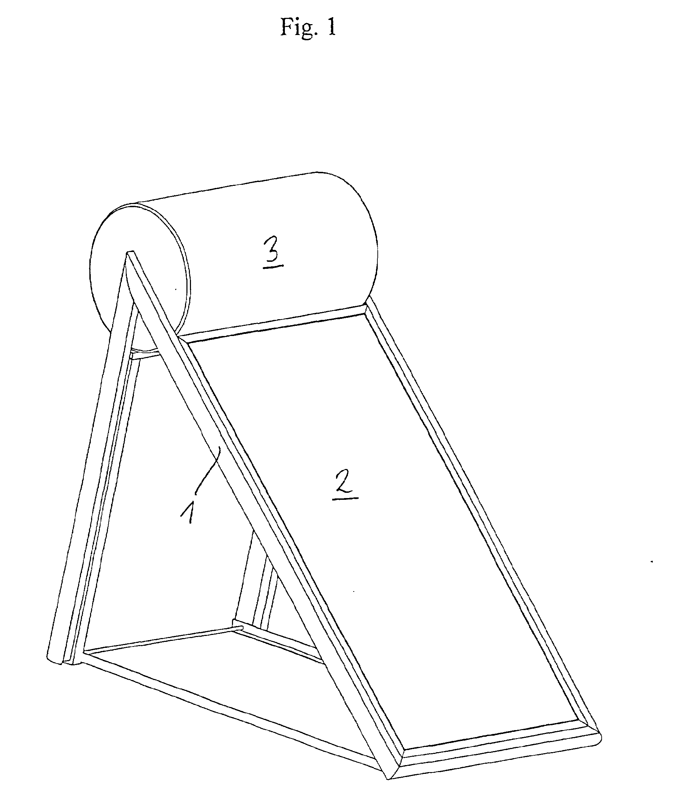

Darin zeigt Fig. 1 eine schematische Darstellung einer Thermosiphonanlage. Mit 1 ist ein Gestell bezeichnet, welches die Kollektorfläche 2 in möglichst optimaler Schräglage zur Haupteinstrahlungsrichtung der Sonne hält. Über dem Kollektor ist der quer angeordnete Speicherbehälter 3 zu sehen. Vom Gestell 1 verdeckt verlaufen die Anschlüsse zwischen dem Kollektor 2 und dem Speicher 3.

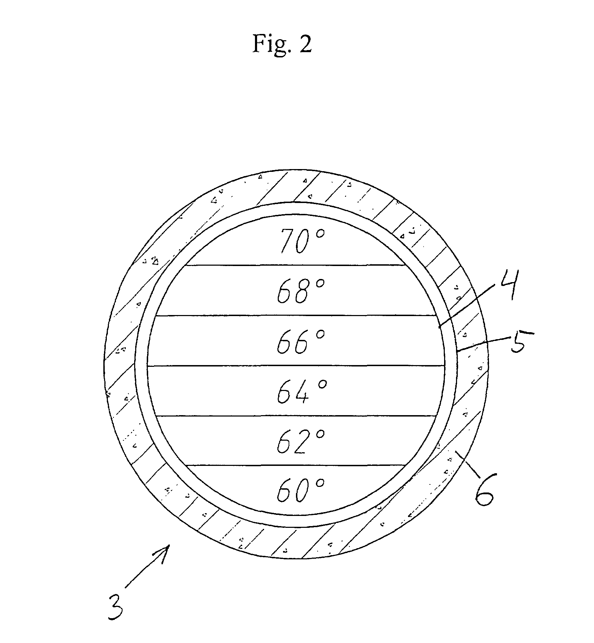

Fig. 2 zeigt einen kreiförmigen Schnitt durch einen Doppelmantelspeicher mit einer typischen Temperaturschichtung, wie sie mit der vorliegenden Erfindung erzielt werden kann. Wie man sieht, können bei Vermeidung von Wirbelbildung Temperaturdifferenzen von 10 °C und mehr erzielt werden. Der Speicher 3 besteht aus dem inneren Speicherbehälter 4 mit den schematisch dargestellten Temperaturschichten, dem äußeren Behälter 5 und der den äußeren Behälter 5 vollstänig umschließenden Isolationsschicht 6.

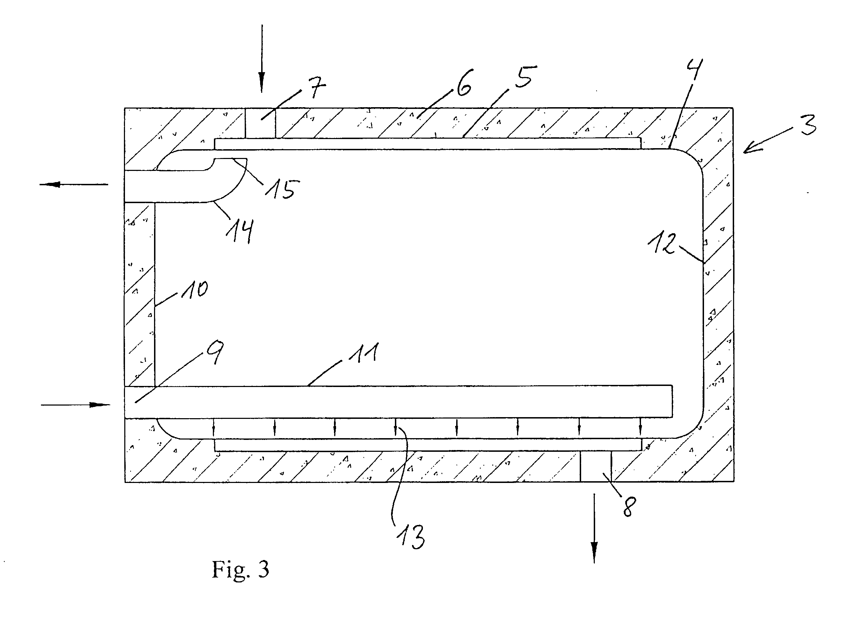

Fig. 3 zeigt einen Längsschnitt durch den Doppelmantelspeicher 3. Der äußere Behälter 5 umfaßt den inneren Behälter 4 beinahe vollständig entlang seiner Längsausdehnung und weist einen Zulauf 7 für das vom Kollektor kommende erhitzte Wärmeträgermedium und einen Ablauf 8 zum Kollektor hin auf. Ein weiterer Zulauf 9 befindet sich an einer Stirnseite 10 des inneren Behälters 4 und besteht aus einer Versorgungsleitung 11, welche in den inneren Behälter 4 nahe seinem tiefsten Punkt bis fast zur gegenüberliegenden Innenwand 12 ragt.

Die Versorgungsleitung 11 weist über ihre Länge verteilt mehrere Auslässe auf, welche in der Fig. 3 durch senkrechte Pfeile 13 angedeutet sind. Ein weiteres Rohr 14, welches zur Ableitung von Warmwasser zum Verbraucher dient, ragt mit seiner Einlauföffnung 15 nahe zum höchsten Punkt des inneren Speicherbehälters 4.

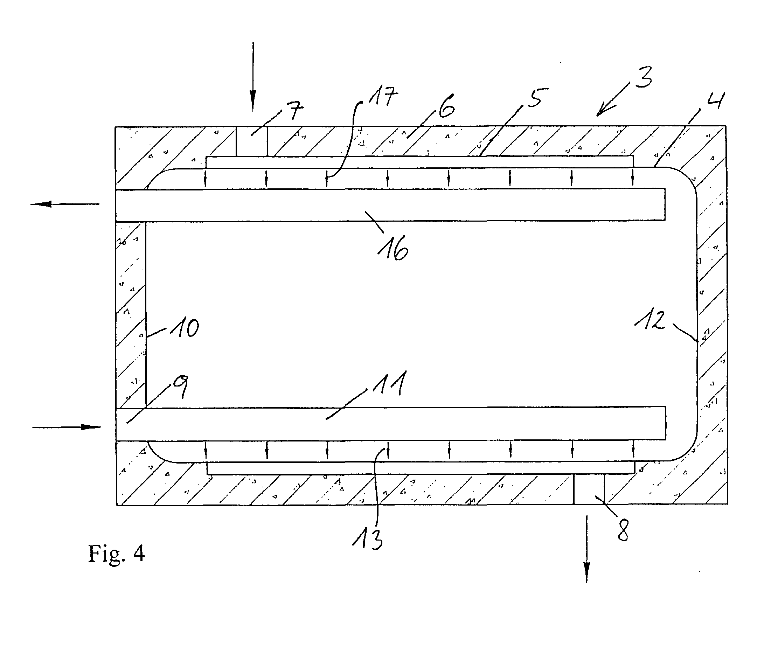

Fig. 4 zeigt eine vorteilhafte Weiterbildung der erfindungsgemäßen Thermosiphonanlage. An Stelle des Rohres 14 befindet sich hier eine Sammelleitung 16, welche analog zur Versorgungsleitung 11 in den inneren Behälter 4, jedoch nahe seinem höchsten Punkt bis fast zur gegenüberliegenden Innenwand 12 ragt. Sie weist über ihre Länge verteilt mehrere Einlässe auf, welche in der Fig. 4 durch senkrechte Pfeile 17 angedeutet sind.

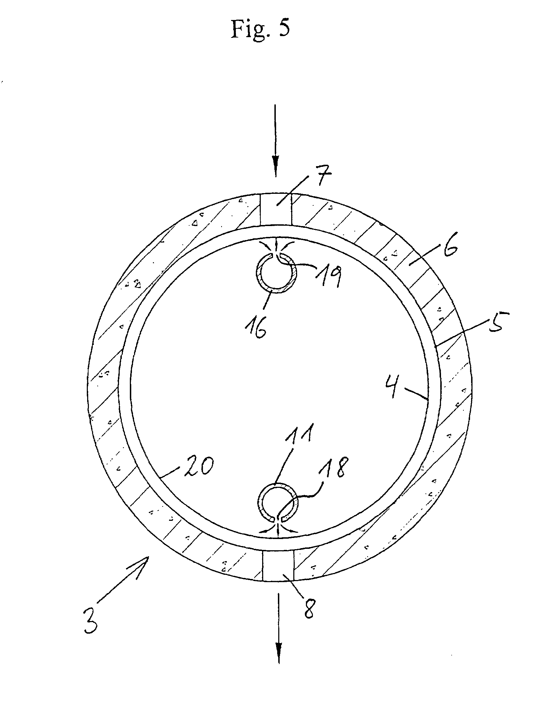

Fig. 5 stellt einen kreisförmigen Schnitt durch den Speicher 3 dar, wobei sehr gut die Aus- bzw. Einströmbewegungen des Speicherwassers erkennbar sind. Der Zulauf 7 vom Kollektor und der Ablauf 8 zum Kollektor befinden sich hier in einer senkrechten Ebene. Die Versorgungsleitung 11 ist dergestalt angeordnet, dass ihre Auslässe 18 von der Mittelachse des Behälters 4 abgewandt in Richtung zur Innenwand 20 angeordnet sind. Ebenso sind die Auslässe 19 von der Sammelleitung 16 zur Innenwand 20 hin ausgerichtet. Durch diese Strömungsausrichtungen wird die Bildung von störenden Wirbeln zusätzlich behindert.

## Patentansprüche

1. Thermosiphonanlage, bestehend aus einem Gestell (1), einem Kollektor (2), in welchem ein Wärmeträgermedium mittels einstrahlender Sonnenenergie über einen Absorber von niedrigerem auf höheres Temperaturniveau gebracht wird und einem oberhalb des Kollektors horizontal angeordneten Speicherbehälter (3) mit einem Zulauf (7), welcher erwärmtes Wärmeträgermedium vom Kollektor (2) zum Speicher (3) transportiert, einer Versorgungsleitung (11), welche frisches Kaltwasser in den Speicherbehälter (3) leitet, einem Ablauf (8), welcher zur Ableitung des Wärmeträgermediums in den Kollektor (2) dient und einer Sammelleitung (14), welche zur Entnahme von Warmwasser zum Verbraucher dient, **dadurch gekennzeichnet, dass** die Versorgungsleitung (11) in den Speicherbehälter (3) ragt und sich entlang des Bodenbereiches fast über die gesamte Länge des Speicherbehälters (3) erstreckt und über ihre innerhalb des Speicherbehälters (3) liegende Länge eine Vielzahl von Durchtrittsöffnungen (18) für frisches Kaltwasser aufweist.

2. Thermosiphonanlage nach Anspruch 1 oder 2, **dadurch gekennzeichnet, dass** die Sammelleitung (16) in den Speicherbehälter (3) ragt und sich fast über die gesamte Länge des Speicherbehälters erstreckt und über ihre innerhalb des Speicherbehälters liegende Länge eine Vielzahl von Durchtittsöffnungen (19) für das Speicherwasser aufweist.

3. Thermosiphonanlage nach Anspruch 1, 2 oder 3, **dadurch gekennzeichnet, dass** die Austrittsöffnungen (18) entlang der Versorgungsleitung (11) bzw. die Eintrittsöffnungen (19) entlang der Sammelleitung (16) von der Mittelachse des Speichers (3) radial nach Außen angeordnet sind.

4. Thermosiphonanlage nach einem der Ansprüche 1 bis 3, **dadurch gekennzeichnet, dass** die Austrittsöffnung (18) und/oder die Eintrittsöffnung (19) aus einem sich über die Länge der Versorgungsleitung (11) bzw. der Sammelleitung (16) erstreckenden Schlitz besteht.

5. Thermosiphonanlage nach einem der Ansprüche 1 bis 4, **dadurch gekennzeichnet, dass** die Austrittsöffnungen (18) und/oder die Einkittsöffnungen (19) als Düsen ausgebildet sind.

6. Thermosiphonanlage nach einem der Ansprüche 1 bis 5, **dadurch gekennzeichnet, dass** der Speicher (3) als Doppelmantelbehälter ausgebildet ist, wobei das durch den Kollektor (2) zirkulierende Wärmeträgermedium über einen Zulauf (7) in den Speicher (3) eintritt und zwischen der äußeren Speicherbehälterwand (5) und der inneren Speicherbehälterwand (4) geführt wird und anschließend über einen Ablauf (8) wieder dem Kollektor (2) zufließt.

7. Verfahren zum Betreiben einer Thermosiphonanlage nach einem der Ansprüche 1 bis 6, **dadurch gekennzeichnet, dass** während der Entnahme von Warmwasser aus dem Speicher (3) zu einem Verbraucher und der damit zeitgleich verbundenen Zufuhr von kaltem Frischwasser in den Speicher mindestens zwei Wasserschichten mit unterschiedlichen Temperaturen erhalten bleiben.

8. Verfahren zum Betreiben einer Thermosiphonanlage nach Anspruch 7, **dadurch gekennzeichnet, dass** der Zulauf und/oder der Ablauf des Speichermediums jeweils entlang einer Strecke über die annähernd gesamte Länge des horizontal angeordneten Speichers (3) über eine Vielzahl von Durchtrittsstellen (18, 19) erfolgt.

9. Verfahren zum Betreiben einer Thermosiphonanlage nach Anspruch 7, 8 oder 9, **dadurch gekennzeichnet, dass** die Durchtrittsstellen (18) entlang der Versorgungsleitung (11) für kaltes Frischwasser so voneinander beabstandet und der Ausströmquerschnitt dergestalt gewählt sind, dass eine gleichmäßige Ausströmung an allen Durchtrittsstellen allein durch den Druckverlust in der Versorgungsleitung (11) bewirkt wird.

## Geänderte Patentansprüche

### Geänderte Patentansprüche gemäss Regel 86(2) EPÜ.

1. Thermosiphonanlage, bestehend aus einem Gestell (1), einem Kollektor (2), in welchem ein Wärmeträgermedium mittels einstrahlender Sonnenenergie über einen Absorber von niedrigerem auf höheres Temperaturniveau gebracht wird und einem oberhalb des Kollektors horizontal angeordneten Speicherbehälter (3) mit einem Zulauf (7), welcher erwärmtes Wärmeträgermedium vom Kollektor (2) zum Speicher (3) transportiert, **einer Versorgungsleitung (11)**, welche frisches Kaltwasser in den Speicherbehälter (3) leitet, wobei die Versorgungsleitung (11) in den Speicherbehälter (3) ragt und sich entlang des Bodenbereiches fast über die gesamte Länge des Speicherbehälters (3) erstreckt, einem Ablauf (8), welcher zur Ableitung des Wärmeträgermediums in den Kollektor (2) dient und einer Sammelleitung (14), welche zur Entnahme von Warmwasser zum Verbraucher dient, **dadurch gekennzeichnet, dass** die Versorgungsleitung (11) innerhalb des Speicherbehälters (3) eine sich fast über ihre gesamte Länge erstreckende schlitzförmige Durchtrittsöffnung (18) für frisches Kaltwasser aufweist.

2. Thermosiphonanlage nach Anspruch 1 oder 2, **dadurch gekennzeichnet, dass** die Sammelleitung (16) in den Speicherbehälter (3) ragt und sich fast über die gesamte Länge des Speicherbehälters erstreckt und über ihre innerhalb des Speicherbehälters liegende Länge eine Vielzahl von Durchtrittsöffnungen (19) für das Speicherwasser aufweist.

3. Thermosiphonanlage nach Anspruch 1, 2 oder 3, **dadurch gekennzeichnet, dass** die Austrittsöffnung (18) entlang der Versorgungsleitung (11) bzw. die Eintrittsöffnungen (19) entlang der Sammelleitung (16) von der Mittelachse des Speichers (3) radial nach Außen angeordnet sind.

4. Thermosiphonanlage nach einem der Ansprüche 1 bis 3, **dadurch gekennzeichnet, dass** die Eintrittsöffnung (19) aus einem sich über die Länge der Sammelleitung (16) erstreckenden Schlitz besteht

5. Thermosiphonanlage nach einem der Ansprüche 1 bis 4, **dadurch gekennzeichnet, dass** die Eintrittsöffnungen (19) als Düsen ausgebildet sind.

6. Thermosiphonanlage nach einem der Ansprüche 1 bis 5, **dadurch gekennzeichnet, dass** der Speicher (3) als Doppelmantelbehälter ausgebildet ist, wobei das durch den Kollektor (2) zirkulierende Wärmeträgermedium über einen Zulauf (7) in den Speicher (3) eintritt und zwischen der äußeren Speicherbehälterwand (5) und der inneren Speicherbehälterwand (4) geführt wird und anschließend über einen Ablauf (8) wieder dem Kollektor (2) zufließt.

7. Verfahren zum Betreiben einer Thermosiphonanlage nach einem der Ansprüche 1 bis 6, **dadurch gekennzeichnet, dass** während der Entnahme von Warmwasser aus dem Speicher (3) zu einem Verbraucher und der damit zeitgleich verbundenen Zufuhr von kaltem Frischwasser in den Speicher mindestens zwei Wasserschichten mit unterschiedlichen Temperaturen erhalten bleiben.

8. Verfahren zum Betreiben einer Thermosiphonanlage nach Anspruch 7, **dadurch gekennzeichnet, dass** der Zulauf und/oder der Ablauf des Speichermediums jeweils entlang einer Strecke über die annähernd gesamte Länge des horizontal angeordneten Speichers (3) über eine Vielzahl von Durchtrittsstellen (18, 19) erfolgt.

9. Verfahren zum Betreiben einer Thermosiphonanlage nach Anspruch 7, 8 oder 9, **dadurch gekennzeichnet, dass** die schlitzförmige Durchtrittsöffnung (18) entlang der Versorgungsleitung (11) für kaltes Frischwasser so gestaltet ist, dass eine annähernd gleichmäßige Ausströmung entlang der schlitzförmigen Öffnung allein durch den Druckverlust in der Versorgungsleitung (11) bewirkt wird.
